# EUROPÄISCHE PATENTSCHRIFT

(11) **EP 1 598 224 B1**
(45) Veröffentlichungstag und Bekanntmachung des Hinweises auf die Patenterteilung: **15.04.2015**
(21) Anmeldenummer: 05104328.9
(22) Anmeldetag: 23.05.2005
(51) Int. Cl.: B60H 1/00

(54) **Vorrichtung zur Ermittlung von Beschlag auf einer Fläche eines Fahrzeuges**
Device for detecting fogging on a surface of a vehicle
Dispositif de détection de buée sur une surface d'un véhicule

(30) Priorität: 21.05.2004 DE 102004025010
(43) Veröffentlichungstag der Anmeldung: 23.11.2005
(73) Patentinhaber: Behr-Hella Thermocontrol GmbH, 70469 Stuttgart (DE)
(72) Erfinder: Pankratz, Eduard, 59510, Oestinghausen (DE); Starkulla, Friedrich Wilhelm, 59581, Warstein (DE)
(74) Vertreter: Von Kreisler Selting Werner - Partnerschaft von Patentanwälten und Rechtsanwälten mbB

(56) Entgegenhaltungen:
- EP-A- 0 412 653
- EP-A- 1 312 521
- DE-A1- 10 104 942
- US-A- 5 710 633

## Beschreibung

Die Erfindung betrifft eine Vorrichtung zur Ermittlung von Beschlag auf einer Fläche eines Fahrzeuges und insbesondere einer Fläche des Innenraums eines Fahrzeuges, wie beispielsweise der Innenseite der Windschutzscheibe.

Um den Beschlag einer Kraftfahrzeugscheibe vorhersagen bzw. messtechnisch erfassen zu können, müssen zwei Messgrößen bekannt sein, nämlich die Scheibentemperatur und die relative Luftfeuchtigkeit im Innenraum. Aus der letztgenannten Größe kann der Taupunkt, also diejenige Temperatur errechnet werden, bei der die Luft kein Wasser mehr aufnehmen kann, so dass dieses kondensiert. Befindet sich die Scheibe auf dieser Temperatur bzw. unterschreitet sie diese, so kondensiert die Feuchtigkeit der Luft an in diesem Fall der Innenseite der (beispielsweise Windschutz-)Scheibe.

Die Scheibentemperatur kann berührungslos mit beispielsweise einem Thermopile erfasst werden. Die Luftfeuchtigkeit wird mittels eines Feuchtigkeitssensors in der Nähe der Scheibe messtechnisch erfasst oder wird aus anderen Größen ermittelt. Beispiele für derartige Systeme finden sich in EP-B-0 314 674 B1 und EP 1 080 955 A1.

Eine weitere Möglichkeit der Vorhersage von Beschlagsneigung bzw. der Ermittlung von Beschlag auf einer Scheibe besteht darin, den Feuchtigkeitssensor direkt auf die Scheibentemperatur zu bringen. Dies wird dadurch realisiert, dass der Feuchtigkeitssensor über eine wärmeleitende Folie auf der Scheibe klebt. Die Scheibe ist beschlagen, wenn die durch den Feuchtigkeitssensor messtechnisch erfasste relative Luftfeuchtigkeit 100% erreicht. Beispiele für auf eine Fahrzeugscheibe aufgeklebte Feuchtigkeitssensoren finden sich in DE 43 16 557 A1, DE 101 52 999 C2 und DE 101 04 942 A1.

Aus DE 692 22 350 T2 ist es bekannt, auf die Windschutzscheibe elektrische Leiter zu kleben, die zu einem Ultraschall-Wandler führen, welcher seinerseits ebenfalls auf die Windschutzscheibe geklebt ist und Veränderungen derselben detektiert.

Während die (insbesondere berührungslose) messtechnische Ermittlung der Scheibentemperatur einen zusätzlichen Temperatursensor erforderlich macht und dadurch aufwendig ist, erfordert die Verklebung des Feuchtigkeitssensors mit der Scheibe den Ausschluss von Gasblasen in der Klebeverbindung. Ferner muss beim Auswechseln der Scheibe sogleich auch der Feuchtigkeitssensor ausgewechselt werden, und zwar auch dann, wenn der Feuchtigkeitssensor selbst nicht defekt ist; denn das Ablösen des festgeklebten Feuchtigkeitssensors und dessen Anbringung an der ausgewechselten Scheibe ist wiederum zu aufwendig und kann zu fehlerbehaftet sein.

Eine Aufgabe der Erfindung besteht darin, eine Vorrichtung zur Ermittlung von Beschlag auf einer Fläche eines Fahrzeuges zu schaffen, die montagefreundlich und damit auf einfache Weise ein- und ausbaubar ist.

Zur Lösung dieser Aufgabe wird mit der Erfindung eine Vorrichtung zur Ermittlung von Beschlag auf einer Fläche eines Fahrzeuges, insbesondere des Innenraum eines Fahrzeuges und vorzugsweise auf der Innenseite einer Scheibe wie beispielsweise der Windschutzscheibe vorgeschlagen, wobei die Vorrichtung versehen ist mit den Merkmalen des Anspruchs 1.

Mit der Erfindung wird also vorgeschlagen, die elektrischen Leiter, die der Energieversorgung des Feuchtigkeitssensors und dessen Beschaltung sowie dem Messdatenaustausch dienen, sogleich auch für die thermische Anbindung des Feuchtigkeitssensors an der zu untersuchenden Fläche zu nutzen. Dabei wird nach der Erfindung aber weiterhin die einfache Montage und Demontage des Feuchtigkeitssensors garantiert. Hierzu erfolgt die elektrische Kontaktierung des Feuchtigkeitssensors bzw. von dessen Platine mit den elektrischen Leitern über Steckkontakte, die jeweils aus einem ersten Steckkontaktelement, das sich an der Platine (allgemein: an einem mit Leiterbahnen versehenen Träger) befindet, und einem zweiten Steckkontaktelement bestehen, welches sich mechanisch und elektrisch in Verbindung mit dem betreffenden Leiter befindet.

Durch Versuche hat sich gezeigt, dass herkömmliche elektrische Steckkontakte (z.B. sogenannte Flachsteckkontakte) neben der elektrischen Kontaktierung auch thermische (Wärme-)Ströme gut übertragen. Die thermische Anbindung von Feuchtigkeitssensor und Platine wird noch weiter verbessert, wenn die Leiter im Bereich ihrer Steckkontaktelemente verbreitert sind. Außerdem ist es vorteilhaft, wenn pro Leiter mehrere Steckkontaktelemente vorgesehen sind.

Die Leiter selbst sind vorzugsweise auf die untersuchende Fläche aufgedampft, wie dies beispielsweise von Scheibenheizungen und -antennen her bekannt ist.

Der Feuchtigkeitssensor nebst Platine ist zweckmäßigerweise (aus optischen Grunden) im Bereich des Fußes für den Fahrzeug-Innenspiegel angeordnet. Hierbei führen die elektrischen Leiter aus dem Dachhimmel nahe dem Scheibenrand heraus, wo sie dann auch enden. Dieser Bereich der Windschutzscheibe ist im Regelfall für die Fahrzeuginsassen nicht einsehbar. Sofern der obere Scheibenrand, wie dies mitunter anzutreffen ist, getönt ist, ist die Leiterbahnfuhrung auf der Scheibe noch unauffälliger. Die Steckkontakte sind beispielsweise durch ein kappenartiges Gehäuses abgedeckt, das zumindest den Feuchtigkeitssensor und die Platine aufnimmt.

Mit der Erfindung wird also eine denkbar einfache mechanische Halterung der den Feuchtigkeitsensor haltenden Platine an einer Fläche geschaffen, wobei für diese mechanische Halterung die zur elektrischen Anbindung des Feuchtigkeitssensors und seiner Beschaltung dienenden Steckkontakte benutzt werden. Diese wiederum sind, wie bei Steckkontakten an sich üblich, abziehbar bzw. lösbar, wobei über diese Steckkontakte zusätzlich eine ausreichend gute thermische Kopplung des Sensors an die Temperatur der Innenfläche gegeben ist. Die Steckkontakte dienen also sowohl der elektrischen Kontaktierung als auch der abnehmbaren mechanischen Halterung und der thermischen Anbindung des Feuchtigkeitssensors.

Die Erfindung wird anhand der Zeichnung nachfolgend näher erläutert. Dabei zeigen im Einzelnen:
- Fig. 1: eine Darstellung eines Fahrzeuges mit im Bereich des Innenrückspiegels erfindungsgemäß angebrachtem Feuchtigkeitssensor,
- Fig. 2: eine Schnittansicht entlang der Linie II-II der Fig. 1 und
- Fig. 3: eine Draufsicht entsprechend dem Pfeil III der Fig. 2 bei abgenommenen Gehäuse.

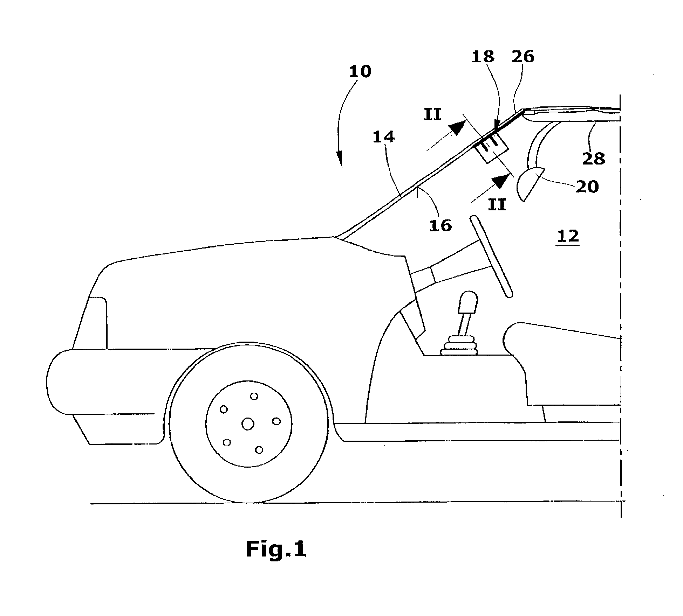

Fig. 1 zeigt in Seitenansicht ein Fahrzeug 10, mit Innenraum 12 und Windschutzscheibe 14, auf deren Innenseite 16 eine Vorrichtung 18 zur messtechnischen Ermittlung von Beschlag angeordnet ist. Wie in Fig. 1 zu erkennen ist, ist die Vorrichtung 18 im Bereich des Innenspiegels 20 und, bezogen auf die Blickrichtung der Insassen, hinter diesem angeordnet.

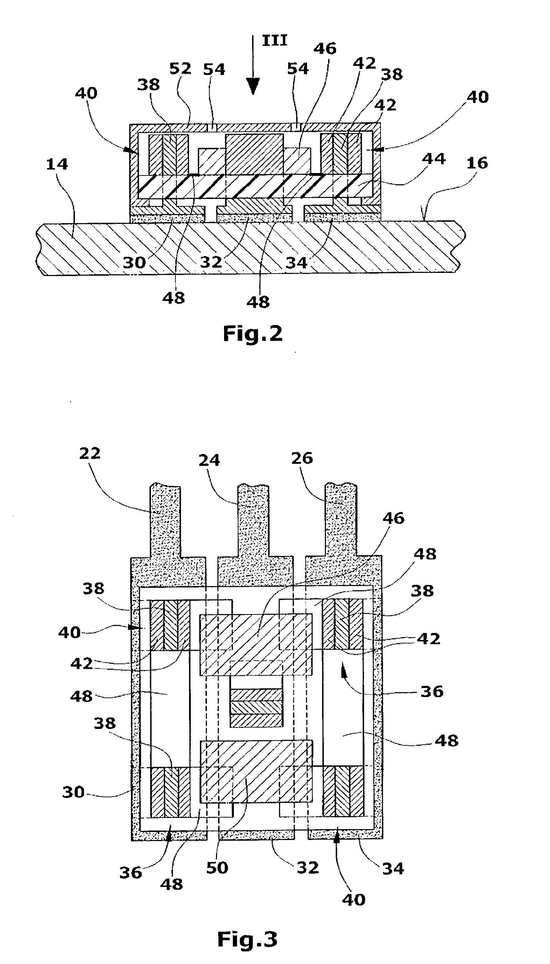

Zur elektrischen Kontaktierung der Vorrichtung 18 dienen (in diesem Ausführungsbeispiel) drei elektrische Leiter 22,24,26, die thermisch mit der Scheibe 14 gekoppelt sind, indem sie beispielsweise auf die Innenseite 16 der Windschutzscheibe 14 aufgeklebt (mittels thermisch leitendem Kleber) oder aufgedampft sind. Die Leiter 22,24,26 sind, durch den Dachhimmel 28 verdeckt, angeschlossen und weisen verbreiterte Enden 30,32,34 (siehe auch Fign. 2 und 3) auf. Im Bereich dieser verbreiterten Enden 30,32,34 ragen von den Leitern 22,24,26 erste Steckkontaktelemente 36 in Form von streifenförmigen Anschlussfahnen 38 auf, wobei pro Leiter vorzugsweise mehrere derartiger erster Anschlusskontaktelemente 36 vorgesehen sind (siehe Fig. 3).

Auf diese Anschlussfahnen 38 sind zweite (Gegen-)Steckkontaktelemente 40 aufsteckbar, die jeweils zwei die Anschlussfahnen 38 beidseitig umgreifende Kontaktzungen 42 aufweisen. Diese zweiten bzw. (Gegen-) Steckkontaktelemente 40 befinden sich auf einer Platine 44, die neben einem Feuchtigkeitssensor 46 auch noch weitere bei 48 angedeutete elektronische Bauteile aufweist. Auf der Platine 44 befinden sich die Kontaktzungen 42 der Steckkontaktelemente 40 mit dem Feuchtigkeitssensor 46 und den anderen elektronischen Bauteilen 48 elektrisch verbindende Leiterbahnen 50. Die Platine 44 ist von einem (Kunststoff-)Gehäuse 52 umgriffen, das die die zweiten Steckkontaktelemente 40, den Feuchtigkeitssensor 46 und die weiteren elektronischen Bauelemente 48 aufweisende Oberseite der Platine 44 abdeckt und Lüftungsöffnungen 54 aufweist.

Durch die großflächigen Berührungen der ersten und zweiten Steckkontaktelemente 36,40 kommt neben einem guten elektrischen Kontakt auch eine gute thermische Leitung zu Stande. Darüber hinaus ist das Gehäuse 54 nebst Platine 44 mechanisch zuverlässig (Reibschluss zwischen den Steckkontaktelementen 36,40) gehalten. Insgesamt ergibt sich damit eine Vorrichtung 18 zur Ermittlung von Beschlag auf einer Fläche eines Fahrzeuges, die bei denkbar einfachem Aufbau sämtliche Vorteile bezüglich einer einfachen Montage und Demontage sowie Funktionszuverlässigkeit gewährleistet.

### Bezugszeichenliste

- 10: Fahrzeug
- 12: Innenraum
- 14: Windschutzscheibe
- 16: Innenseite der Windschutzscheibe
- 18: Vorrichtung zur Ermittlung von Beschlag auf der Innenseite der Windschutzscheibe
- 20: Innenspiegel
- 22: elektrischer Leiter
- 24: elektrischer Leiter
- 26: elektrischer Leiter
- 28: Dachhimmel
- 30: verbreitertes Ende
- 32: verbreitertes Ende
- 34: verbreitertes Ende
- 36: erste Steckkontaktelemente
- 38: Anschlussfahnen der ersten Steckkontaktelemente
- 40: zweite Steckkontaktelemente
- 42: Kontaktzungen der zweiten Steckkontaktefemente
- 44: Platine
- 46: Feuchtigkeitssensor
- 48: Leiterbahnen
- 50: elektronische Bauelemente
- 52: Gehäuse
- 54: Lüftungsöffnungen im Gehäuse

## Patentansprüche

1. Vorrichtung zur Ermittlung von Beschlag auf einer Fläche (16) eines Fahrzeuges, insbesondere des Innenraums eines Fahrzeuges und vorzugsweise auf der Innenseite einer Scheibe, wie z.B. der Windschutzscheibe mit
- einem Feuchtigkeitssensor (46) und
- einer Platine (44), auf der der Feuchtigkeitssensor (46) angeordnet ist und die mit ersten Steckkontaktelementen (40) versehene, zu dem Feuchtigkeitssensor (46) führende Leiterbahnen (50) aufweist,
**gekennzeichnet durch**
- auf die Fläche (16) aufbringbare, zur Platine (44) führende elektrische Leiter (22,24,26) zur elektrischen Verbindung mit dem Feuchtigkeitssensor (46) und zur thermischen Kopplung des Feuchtigkeitssensors (46) mit der Fläche (16),
- wobei die Leiter (22,24,26) zur elektrischen Verbindung mit den ersten Steckkontaktelementen (40), zur thermischen Verbindung mit dem Feuchtigkeitssensor (46) und zur mechanischen Halterung der Platine (44) mit zweiten Steckkontaktelementen (36) versehen sind.

2. Vorrichtung nach Anspruch 1, **dadurch gekennzeichnet, dass** die Leiter (22,24,26) streifenförmig bzw. flächig ausgebildet sind.

3. Vorrichtung nach Anspruch 2, **dadurch gekennzeichnet, dass** die Leiter (22,24,26) im Bereich ihrer zweiten Steckkontaktelemente (36) verbreitert sind.

4. Vorrichtung nach einem der Ansprüche 1 bis 3, **dadurch gekennzeichnet, dass** zur Verbindung der Leiter (22,24,26) mit den Leiterbahnen (50) der Platine (44) pro Leiter und Leiterbahn mehrere erste und zweite Steckkontaktelemente (40,36) vorgesehen sind.

5. Verwendung einer Vorrichtung (18) zur Ermittlung von Beschlag auf einer Fläche (16) eines Fahrzeuges, insbesondere des Innenraums eines Fahrzeuges und vorzugsweise auf der Innenseite einer Scheibe, wie z.B. der Windschutzscheibe, gemäß Anspruch 1.

## Claims

1. A device for detecting fogging on a surface (16) of a vehicle, particularly in the interior of a vehicle and preferably on the inner side of car glass such as e.g. the windshield, comprising
- a humidity sensor (46) and
- a board (44) having the humidity sensor (46) arranged on it and comprising conducting paths (50), the conducting paths being provided with first plug contact elements (40) and leading to the humidity sensor (46),
**characterized by**
- electric conductors (22,24,26) adapted to be applied on said surface (16) and leading to said board (44), said conductors serving for electrical connection to the humidity sensor (46) and for thermal coupling of the humidity sensor (46) to said surface (16),
- wherein the conductors (22,24,26), for electric connection to the first plug contact elements (40), for thermal connection to the humidity sensor (46) and for mechanical attachment of the board (44), are provided with second plug contact elements (36).

2. The device according to claim 1, **characterized in that** the conductors (22,24,26) are strip-shaped and flat, respectively.

3. The device according to claim 2, **characterized in that** the conductors (22,24,26) are enlarged in width in the area of their second plug contact elements (36).

4. The device according to any one of claims 1 to 3, **characterized in that**, for connection of the conductors (22,24,26) to the conducting paths (50) of the board (44), a plurality of first and second plug contact elements (40,36) are provided per conductor and conducting path.

5. Use of a device (18) for detecting fogging on a surface (16) of a vehicle, particularly in the interior of a vehicle and preferably on the inner side of car glass such as e.g. the windshield, according to claim 1.

## Revendications

1. Dispositif pour la détection de buée sur une surface (16) d'un véhicule, en particulier de l'espace intérieur d'un véhicule, et de préférence sur la surface interne d'une vitre, telle que, par exemple, le pare-brise, comprenant :
- un détecteur d'humidité (46) et
- une platine (44) sur laquelle le détecteur d'humidité (46) est monté et qui présente des pistes conductrices (50) munies de premiers éléments de contact à broche (40) qui conduisent au détecteur d'humidité (46),
**caractérisé par**
- des conducteurs électriques (22, 24, 26) pouvant être déposés sur la surface (16), qui conduisent à la platine (44), et qui sont prévus pour la liaison électrique avec le détecteur d'humidité (46) et pour le couplage thermique du détecteur d'humidité (46) avec la surface (16),
- les conducteurs (22, 24, 26) prévus pour la liaison électrique avec les premiers éléments de contact à broche (40), pour la liaison thermique avec le détecteur d'humidité (46) et pour la fixation mécanique de la platine (44) étant munis de seconds éléments de contact à broche (36).

2. Dispositif selon la revendication 1, **caractérisé en ce que** les conducteurs (22, 24, 26) sont en forme de bande ou de forme plate.

3. Dispositif selon la revendication 2, **caractérisé en ce que** les conducteurs (22, 24, 26) sont élargis dans la région de leurs seconds éléments de contact à broche (36).

4. Dispositif selon l'une des revendications 1 à 3, **caractérisé en ce que**, pour la liaison des conducteurs (22, 24, 26) avec les pistes conductrices (50) de la platine (44), il est prévu plusieurs premiers et seconds éléments de contact à broche (40, 36) pour chaque conducteur et piste conductrice.

5. Utilisation d'un dispositif (18) pour la détection de buée sur une surface (16) d'un véhicule, en particulier de l'espace intérieur d'un véhicule et de préférence sur la surface interne d'une vitre telle que, par exemple, le pare-brise, selon la revendication 1.
